# EUROPEAN PATENT SPECIFICATION

(11) **EP 2 712 058 B1**
(45) Date of publication and mention of the grant of the patent: **11.09.2019**
(21) Application number: 11865546.3
(22) Date of filing: 16.05.2011
(51) Int. Cl.: H02K 1/27, H02K 29/03

(54) **PERMANENT-MAGNET TYPE ROTATING ELECTRICAL MACHINE**
ELEKTRISCHE DREHMASCHINE MIT PERMANENTMAGNET
MACHINE ÉLECTRIQUE ROTATIVE DU TYPE À AIMANTS PERMANENTS

(43) Date of publication of application: 26.03.2014
(73) Proprietor: Mitsubishi Electric Corporation, Tokyo 100-8310 (JP)
(72) Inventor: HAZEYAMA, Moriyuki, Tokyo 100-8310 (JP); KANEKO, Kenta, Tokyo 100-8310 (JP); INOUE, Masaya, Tokyo 100-8310 (JP)
(74) Representative: Witte, Weller & Partner Patentanwälte mbB
(86) International application number: PCT/JP2011/061164
(87) International publication number: WO 2012/157056

(56) References cited:
- WO-A1-2010/044426
- WO-A1-2011/001533
- JP-A- 2000 152 539
- JP-A- 2002 223 538
- JP-A- 2002 305 859
- JP-A- 2002 315 240
- JP-A- 2004 096 925
- JP-A- 2011 015 484
- US-A1- 2007 063 607

## Description

### Field

The present invention relates to a rotating electrical machine such as a vehicle motor, and particularly to a configuration of a rotor of a rotating electrical machine in which a permanent magnet is arranged inside the rotor.

### Background

Conventionally, there are permanent-magnet type motors that use a permanent magnet as field generating means, and there has been known an interior permanent magnet motor (hereinafter "IPM motor") in which a permanent magnet is embedded inside a rotor to increase a centrifugal force resistance so as to apply the permanent-magnet type motor to a high-speed rotation region (see, for example, Patent Literature 1 mentioned below).

According to the IPM motor described in Japanese Patent Application Laid-open No. 2009-118731, it is proposed to provide a groove (a slit) in a magnetic pole gap (a q-axis) of a rotor so as to reduce torque ripples.

Document US 2007/0063607 A1 discloses a permanent-magnet type rotating electrical machine according to the preamble of claim 1. The document shows a rotor core provided with a plurality of slits extending in the rotation shaft direction, independently of openings. The first slit is arranged at the center of the magnetic pole of the rotor core to be capable of absorbing stress acting on an inner circumferential surface of each opening in a direction normal to a main surface of a permanent magnet. The second slit is arranged between the magnetic poles of the rotor core to be capable of absorbing stress acting in parallel with the main surface of the permanent magnet. Thus, the rotor core is prevented from deforming in a radial outward direction. Further, by forming the first and second slits each in a form not interfering the magnetic path of the magnetic flux by the stator passing inside the rotor core, the motor performance is ensured.

Document JP 2002 305859 A shows a synchronous motor including permanent magnets, an interpole section formed between the permanent magnets, a plurality of stator poles, and a stator core formed with slots between the respective stator poles. A pole opening angle θa of the permanent magnet and an interpole opening angle θb of the interpole section are determined from equations: θa=(Na+1/2).Sp, θb=Nb.Sp, where, θa: magnetic pole opening angle of the permanent magnets θb: commutating pole opening angle of commutation pole section Na, Nb: positive integer. Thus, a reverse voltage can be formed into a sinewave shape, and the amount of magnetic flux passing through the interpole can be kept constant.

### Summary

### Technical Problem

However, according to the technique described in JP 2009-118731 mentioned above, the depth of the groove formed in a q-axis magnetic path needs to be extended to around an inner-peripheral end of a permanent magnet embedded in a rotor. Therefore, machining of a magnetic steel plate to be laminated is difficult, and thus there is a problem that it is difficult to achieve high diametral accuracy of a rotor core.

The present invention has been achieved to solve the above problems, and an object of the present invention is to provide a permanent-magnet type rotating electrical machine that can reduce torque ripples without degrading the diametral accuracy of a rotor core.

### Solution to Problem

The present invention is directed to a permanent-magnet type rotating electrical machine that achieves the object. According to the invention, a permanent-magnet type rotating electrical machine according to claim 1 is provided. One example of the present disclosure - the example does not form part of the invention - relates to a permanent-magnet type rotating electrical machine. The permanent-magnet type rotating electrical machine includes a stator having a plurality of slots for accommodating a stator coil inside the slots; a rotor having a rotor core arranged rotatably via a rotation gap with respect to the stator, with a plurality of permanent magnets per pole embedded in the rotor core; magnet insertion holes formed in a protruding shape toward a center of the rotor for embedding the permanent magnets in the rotor core; a cavity formed at least on both of outer sides of the permanent magnet when the permanent magnets are embedded in each of the magnet insertion holes; and a pair of flux control holes provided for each magnetic pole in a symmetrical shape with respect to a center line between the magnetic poles, in a magnetic pole gap between a first permanent magnet group including the permanent magnets and another permanent magnet group adjacent to the first permanent magnet group. Where d is a diameter of the respective flux control holes, m is a center-to-center distance of the pair of flux control holes, b is a width of the magnetic pole gap, and τ is a pole pitch of the permanent magnetic group, the flux control holes are provided so that a value of m/τ obtained by standardizing the center-to-center distance m by the pole pitch τ of the permanent magnet group satisfies 0.08<m/τ<(b-2d)/τ.

### Advantageous Effects of Invention

According to the permanent-magnet type rotating electrical machine of the present invention, torque ripples can be reduced while maintaining the diametral accuracy of a rotor core.

### Brief Description of Drawings

FIG. 1 is a cross-sectional view of a permanent-magnet type electric motor, which is an example of a permanent-magnet type rotating electrical machine according to a first example which does not form part of the invention.
FIG. 2 is a schematic cross-sectional view of a rotor, depicting a magnetic pole structure of a permanent magnet to be embedded in a rotor.
FIG. 3 is a partial enlarged view of a portion indicated by a broken line in FIG. 2 when a permanent magnet is not inserted.
FIG. 4 is a partial enlarged view corresponding to FIG. 3 when a permanent magnet is inserted.
FIG. 5 is an explanatory diagram of detailed positions of flux control holes according to the first example.
FIG. 6 depicts a temporal change of torque ripples corresponding to the presence of flux control holes according to the first example.
FIG. 7 depicts a relation between a center-to-center distance of the flux control holes according to the first example and amplitudes of torque ripples.
FIG. 8 is an axial cross-sectional view of a flux control hole according to an inventive embodiment formed by a caulking structure.
FIG. 9 depicts a relation between a center-to-center distance of the flux control holes according to the inventive embodiment formed by a caulking structure and a torque ripple amplitude.
FIG. 10 is a schematic cross-sectional view of a part of a configuration of a rotor core of a permanent-magnet type rotating electrical machine according to a second example.
FIG. 11 depicts a relation between a center-to-center distance of flux control holes formed by a rotor configuration according to the second example and a torque ripple amplitude (a simulation result).
FIG. 12 is a schematic cross-sectional view of a part of a configuration of a rotor core of a permanent-magnet type rotating electrical machine according to a further embodiment.

### Description of Embodiments and Examples

Exemplary embodiments of a permanent-magnet type rotating electrical machine according to the present invention will be explained below in detail with reference to the accompanying drawings.

### First Example

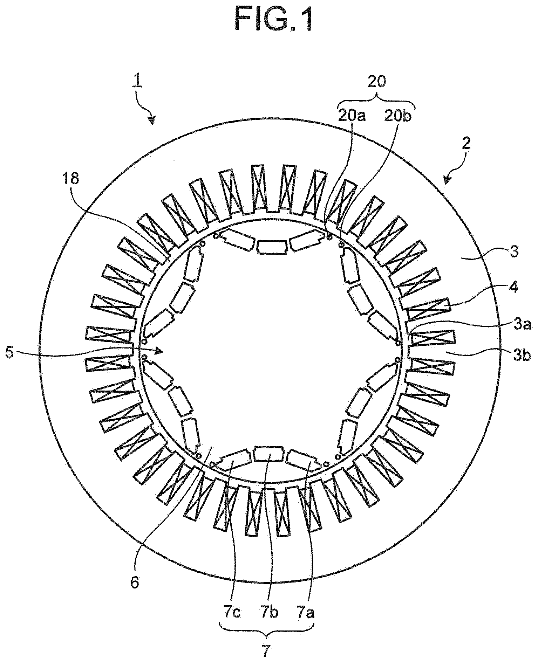

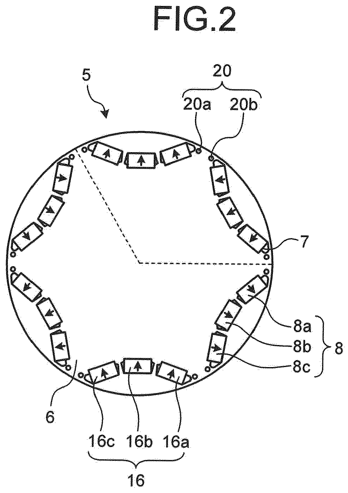

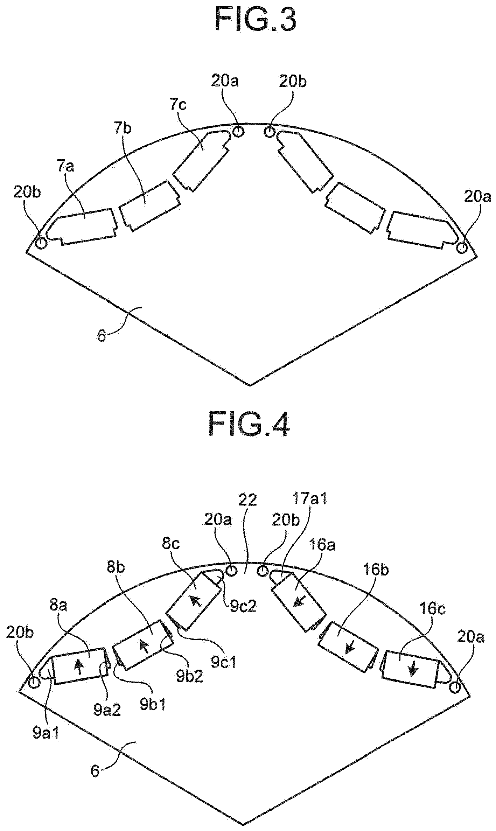

FIG. 1 is a cross-sectional view of a permanent-magnet type electric motor, which is a first example of a permanent-magnet type rotating electrical machine, FIG. 2 is a schematic cross-sectional view of a rotor, depicting a magnetic pole structure of a permanent magnet to be embedded in a rotor, FIG. 3 is a partial enlarged view of a portion indicated by a broken line in FIG. 2 when a permanent magnet is not inserted, and FIG. 4 is a partial enlarged view corresponding to FIG. 3 when a permanent magnet is inserted.

A permanent-magnet type electric motor 1 according to the first example includes a stator 2 and a rotor 5. The stator 2 includes a cylindrical stator core 3 and, for example, 36 teeth 3b are formed on an inner circumference of the stator core 3 intermittently at an equiangular pitch to form 36 slots 3a. A stator coil 4 is wound and accommodated in the slot 3a so as to include a predetermined number of teeth 3b therein.

The rotor 5 includes a rotor core 6 produced by, for example, laminating and integrating a predetermined number of magnetic steel plates so that an outer periphery forms a cylindrical surface, and 18 magnet insertion holes 7 are arranged at an equiangular pitch, and permanent magnets 8 (8a to 8c: see FIGS. 2 and 4) and permanent magnets 16 (16a to 16c: see FIG. 2) respectively accommodated in each of the magnet insertion holes 7. The rotor 5 is arranged rotatably with respect to the stator 2 via a rotation gap 18.

The arrangement of the magnet insertion holes 7 is such that, as shown in FIG. 3, there are two magnet insertion holes 7a and 7c at both ends of one magnet insertion hole 7b, and six sets of magnet insertion holes 7 are arranged (formed) in a substantially U-shape so as to open toward the outer periphery (outer circumferential direction) of the rotor core 6. The permanent magnets 8a to 8c, which are the first set of permanent magnets, are magnetized in a direction in which the magnetic flux converges toward the outer periphery of the rotor core 6. Meanwhile, the permanent magnets 16a to 16c of an adjacent set (a second set of permanent magnets) are magnetized in a direction in which the magnetic flux expands toward the center of the rotor core 6. That is, in the rotor in the permanent-magnet type electric motor according to the first example, a permanent magnet group magnetized in the direction in which the magnetic flux of the permanent magnet converges toward the outer periphery of the rotor and a permanent magnet group magnetized in the direction in which the magnetic flux expands toward the center of the rotor are arranged alternately.

The magnetization direction of the permanent magnet group is set as described above so as to form an induced voltage of a stator coil in a sine wave form, and in an application in which the induced voltage of the stator coil does not need to be formed in a sine wave form, the direction of the magnetic flux is not limited to the direction described above. That is, respective magnetization directions of respective permanent magnet groups magnetized in the direction toward the outer periphery of the rotor and in the direction toward the center of the rotor can be parallel to each other.

Furthermore, on the both sides of the permanent magnets 8a to 8c embedded in the magnet insertion holes 7a to 7c, cavities 9 as shown in FIG. 4 are formed (cavities 9a1 and 9a2 are formed on the both sides of the permanent magnet 8a, cavities 9b1 and 9b2 are formed on the both sides of the permanent magnet 8b, and cavities 9c1 and 9c2 are formed on the both sides of the permanent magnet 8c).

Further, in the first example, in a magnetic pole gap 22 between the permanent magnets 8a to 8c that form a first permanent magnet group and the permanent magnets 16a to 16c that form an adjacent permanent magnet group, a flux control hole 20a is provided around the cavity 9c2 formed in the permanent magnet 8c in the first permanent magnet group, and a flux control hole 20b is provided around a cavity 17a1 formed in the permanent magnet 16a in the adjacent permanent magnet group. These flux control holes 20a and 20b can reduce torque ripples, and it is preferable to form the depth of holes approximately in the same thickness as that of the permanent magnet 8 to be embedded in the rotor core 6.

As an example, FIG. 1 depicts an electric motor in which 36 slots 3a are arranged at an equiangular pitch in the circumferential direction of the stator 2, 18 permanent magnets 8 and 16 that form six permanent magnet groups are embedded in the rotor core 6 in the circumferential direction, and six pairs (that is, 12) flux control holes 20 are provided in six magnetic pole gaps between the six permanent magnetic groups (six slots per pole, three permanent magnets per pole, and two flux control holes 20 per space between magnetic poles). However, the number of poles and the number of slots of the electric motor, the number of permanent magnets, the number of flux control holes, and the like are not limited to the configuration shown in FIG. 1, and any number can be selected therefor.

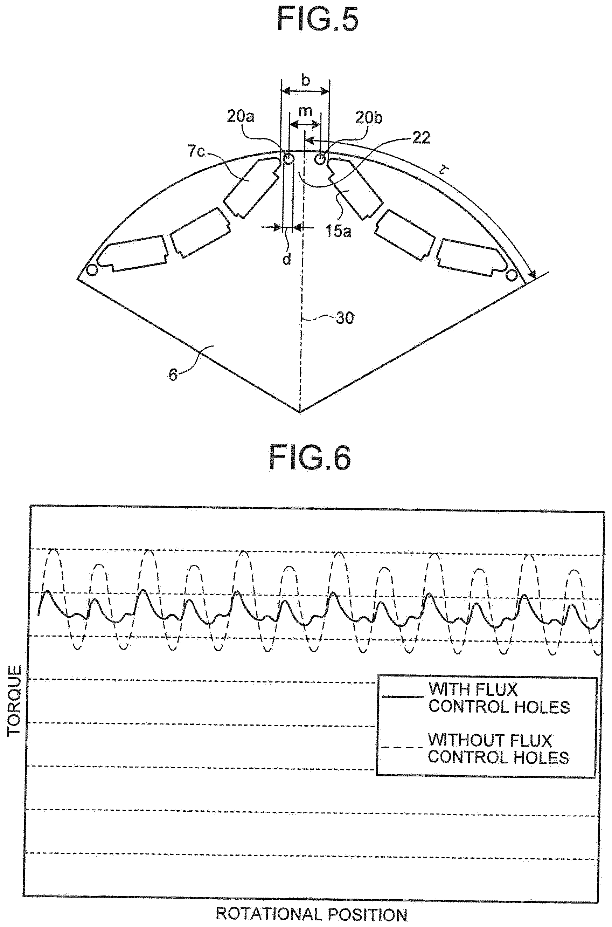

Detailed positions of these flux control holes 20a and 20b are explained next with reference to FIG. 5.

In FIG. 5, a center line 30 between magnetic poles, passing through the center of the rotor core 6, is drawn at an equal distance from the magnet insertion hole 7c at the right end of the first permanent magnet group and a magnet insertion hole 15a at the left end of the adjacent permanent magnet group. The flux control holes 20a and 20b are provided at the equal distance from the center line 30 between magnetic poles, that is, the flux control holes 20a and 20b are provided axisymmetrically with respect to the center line 30 between magnetic poles.

Next, for example, in a case where the shape of the flux control hole 20 is circular, there is examined torque ripples while designating a center-to-center distance m of the flux control holes 20a and 20b, a diameter d of the respective flux control holes, and a pole pitch τ of the permanent magnetic group as parameters, as shown in FIG. 5. When the shape of the flux control hole 20 is circular, m=0 means that the flux control holes 20a and 20b are overlapped on each other to form one flux control hole, and m=d means that one point of the flux control hole 20a and one point of the flux control hole 20b come in contact with each other. Accordingly, when 0<m<d, it means that a part of the flux control hole 20a and a part of the flux control hole 20b are overlapped on each other to form substantially one elliptical shape.

FIG. 6 depicts a temporal change of torque ripples corresponding to the presence of the flux control holes 20 (a simulation result), with a rotational position of a motor being plotted on a horizontal axis and a torque being plotted on a vertical axis. A solid line indicates a case where the flux control holes 20 are provided, and a broken line indicates a case where the flux control holes 20 are not provided. As shown in FIG. 6, it is understood that torque ripples are considerably reduced by providing the flux control holes 20.

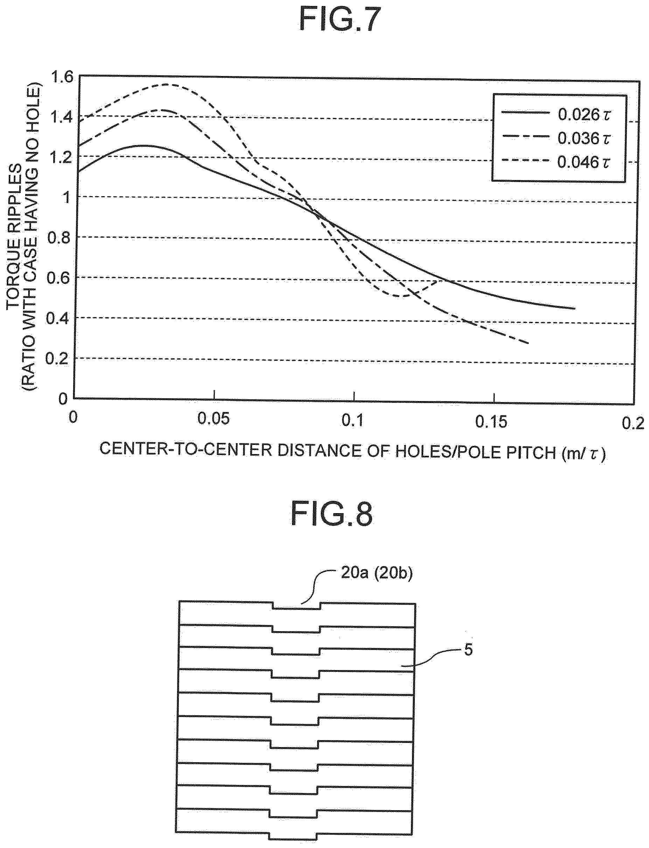

FIG. 7 depicts a relation between a center-to-center distance of the flux control holes 20 and amplitudes of torque ripples (a simulation result). In FIG. 7, a value obtained by standardizing the center-to-center distance of the flux control holes 20a and 20b by the pole pitch τ of the magnet is plotted on a horizontal axis, and a value obtained by standardizing an amplitude value of torque ripples when having the flux control holes 20 by an amplitude value of torque ripples when the flux control holes 20 are not provided is plotted on a vertical axis, while designating the diameter of the flux control hole 20 (a standard value with respect to the pole pitch τ) as a parameter.

In FIG. 7, a solid line indicates a case where each diameter of the flux control holes 20a and 20b is 0.026τ, a one-dot chain line indicates a case where each diameter of the flux control holes 20a and 20b is 0.036τ, and a broken line indicates a case where each diameter of the flux control holes 20a and 20b is 0.046τ. In any of these three cases, setting conditions are such that the flux control holes 20a and 20b do not overlap on each other, and parts of the flux control holes 20a and 20b do not overlap on the magnet insertion hole 7c or the magnet insertion hole 15a (see FIG. 5).

As shown in FIG. 7, when it is assumed that a value (m/τ) obtained by standardizing the center-to-center distance m of the flux control holes 20a and 20b by the pole pitch τ is equal to or larger than 0.08 regardless of the size (diameter) of the flux control holes 20, torque ripples can be reduced as compared to the case where the flux control holes 20 are not provided. Furthermore, when it is assumed that the value of m/τ is 0.1 or larger, a reduction rate of torque ripples equal to or higher than 20% can be acquired in the three cases shown in FIG. 7, and thus it is a more preferable setting value.

In the simulation of FIG. 7, the value of m/τ is set to less than 0.2. This condition maintains a condition such that parts of the flux control holes 20a and 20b do not overlap on the magnet insertion hole 7c or the magnet insertion hole 15a, that is, a condition of m<(b-2d) (m/τ<(b-2d)/τ) when a width of the magnetic pole gap between the first permanent magnet group and another permanent magnet group adjacent to the first permanent magnet group is assumed to be b.

As described above, according to the permanent-magnet type rotating electrical machine of the first example, a pair of flux control holes is provided in a magnetic pole gap of a rotor, and it is set such that the pair of flux control holes does not overlap on each other, each of the flux control holes does not overlap on a part of the magnet insertion holes adjacent to each other, and the value (m/τ) obtained by standardizing the center-to-center distance m of the pair of flux control holes by the pole pitch τ becomes equal to or larger than 0.08. Therefore, the torque ripples can be reduced. In addition, because this method is a simple method of providing holes in a part of a rotor core, high diametral accuracy of the rotor core can be easily achieved.

In the first example, a concept of flux control holes has been explained. However, the hole portion does not need to be a cavity (air), and a material having a lower magnetic permeability than that of a rotor core (resin or the like) can be embedded therein.

### Inventive embodiment

In the inventive embodiment, a pair of the flux control holes 20a and 20b that can reduce torque ripples is provided in a magnetic pole gap of a rotor. However, portions of the flux control holes 20a and 20b can have a caulking structure as shown in FIG. 8. FIG. 8 is an axial cross-sectional view of a flux control hole formed by a caulking structure.

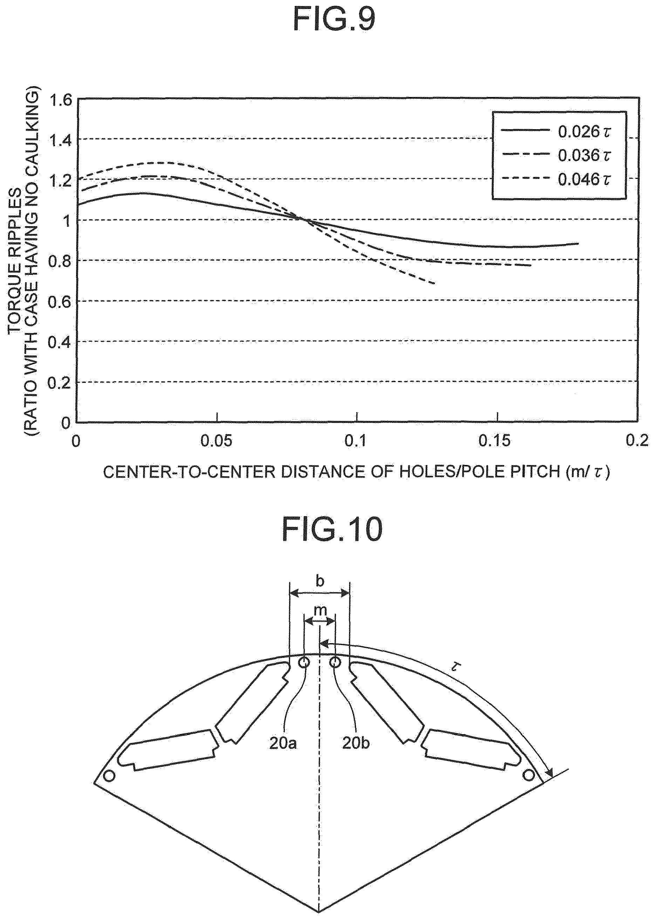

FIG. 9 depicts a relation between a center-to-center distance of the flux control holes 20 formed by a caulking structure and a torque ripple amplitude (a simulation result). The relation between the horizontal axis and the vertical axis, and the diameter of the flux control holes 20 as a parameter are the same as those of the example.

As shown in FIG. 9, when the value (m/τ) obtained by standardizing the center-to-center distance m of the flux control holes 20 by the pole pitch τ is set equal to or larger than 0.08, regardless of the size (diameter) of the flux control holes 20, torque ripples can be reduced as compared to a case where a caulking structure is not provided.

When the portion of the flux control hole 20 is formed by a caulking structure, the magnetic permeability of the portion of the flux control hole 20 becomes smaller than that of the rotor core 6. Therefore, the configuration of the inventive embodiment becomes equivalent to that of the example, and torque ripples can be reduced. The axial direction of the rotor can be fixed by a caulking structure, and the machinability thereof can be improved. That is, by forming the portion of the flux control holes 20 by the caulking structure, an effect of bonding and integrating the magnetic steel plates that constitute the rotor core 6 and an effect of reducing torque ripples by controlling the magnetic flux in the rotor 2 can be simultaneously acquired.

As described above, according to the permanent-magnet type rotating electrical machine of the inventive embodiment, a pair of holes (caulking holes) having a caulking structure is provided in a magnetic pole gap of a rotor in such a manner that each one of a pair of caulking holes does not overlap on an adjacent magnet insertion hole, and the value (m/τ) obtained by standardizing the center-to-center distance m of these caulking holes by the pole pitch τ is set equal to or larger than 0.08. Accordingly, the pair of caulking holes functions as the flux control holes explained in the embodiment and torque ripples can be reduced. Furthermore, because this method is a simple method of providing a hole having a caulking structure in a part of a rotor core, the diametral accuracy of the rotor core is not degraded.

### Second example

FIG. 10 is a schematic cross-sectional view of a part of a configuration of a rotor core of a permanent-magnet type rotating electrical machine according to a second example. In the first example and inventive embodiment, three permanent magnets are arranged per pole in a substantially U-shape. However, in the second example, as shown in FIG. 10, two permanent magnets are arranged per pole in a V-shape, and the flux control holes 20a and 20b identical to those of the first example are provided in a magnetic pole gap.

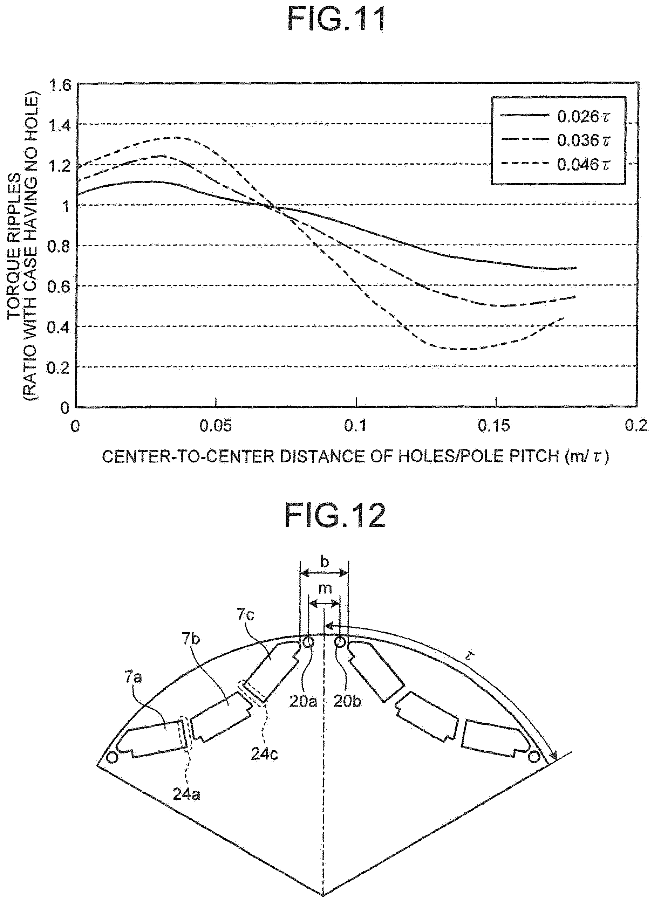

FIG. 11 depicts a relation between a center-to-center distance of the flux control holes 20 formed by a rotor configuration according to the second example and a torque ripple amplitude (a simulation result). The relation between the horizontal axis and the vertical axis, and the diameter of the flux control holes 20 as a parameter are the same as those of the first example.

As shown in FIG. 11, when the value (m/τ) obtained by standardizing the center-to-center distance m of the flux control holes 20a and 20b by the pole pitch τ is set equal to or larger than 0.075, regardless of the size (diameter) of the flux control holes 20, torque ripples can be reduced as compared to a case where the flux control holes 20 are not provided. However, similarly to the first example, the condition of m/τ<(b-2d)/τ needs to be satisfied as a condition such that parts of the flux control holes 20a and 20b do not overlap on adjacent magnet insertion holes.

Furthermore, according to the configuration of the rotor core of the second example, because the number of permanent magnets is one less than that of the first example per pole, a process of inserting a magnet is reduced, and the machinability thereof can be improved.

### Further embodiment

FIG. 12 is a schematic cross-sectional view of a part of a configuration of a rotor core of a permanent-magnet type rotating electrical machine according to a further embodiment. A detailed cross-sectional view of a rotor according to the further embodiment of the present disclosure is shown. In the first example, as shown in FIG. 3 and 4, when the permanent magnets are inserted into the three magnet insertion holes 7a to 7c, a cavity is formed on opposite sides of all the holes. In contrast, in the further embodiment, as shown by broken lines 24a and 24c in FIG. 12, any cavity is not formed on the respective inner sides of the magnet insertion holes 7a and 7c positioned on the opposite sides. Because portions indicated by the broken lines 24a and 24c are away from the flux control holes 20a and 20b, the influence thereof on the simulation result shown in FIGS. 6 and 7 is small. Therefore, even with the configuration of the rotor core according to the further embodiment, effects identical to those of the first example can be obtained.

According to the configuration of the rotor core of the further embodiment, because cavities on the side faces of the central permanent magnet can be increased, insertion of an adhesive for fixing the permanent magnet is facilitated, and thus a motor can be easily assembled.

The present invention can be configured while modifying it without departing from the scope of the invention as defined by the appended claims.

For instance, in the inventive embodiments, a configuration of a rotor in which two or three permanent magnets are arranged per pole in a V-shape or a U-shape toward the outer periphery (that is, in a depressed shape toward the outer periphery or in a protruding shape toward the center of the rotor) has been exemplified. However, the number of permanent magnets can be four or more per pole. That is, in the permanent-magnet type rotating electrical machine according to the present invention, a plurality of permanent magnets can be arranged per pole in a depressed shape toward the outer periphery or in a protruding shape toward the center of the rotor.

According to the inventive embodiments, for instance, a permanent magnet having a substantially rectangular shape such as that shown in FIG. 4 has been exemplified as the permanent magnet 8 to be embedded in the magnet insertion hole 7. However, the shape of the permanent magnet is not limited to such rectangular shape, and, for example, a trapezoidal shape can be also used.

Furthermore, in the inventive embodiments, as an example, a case where the shape of the flux control hole 20 is circular has been explained. However, the shape is not limited to circular, and other shapes can be also used. Note that, in a case of a circular flux control hole, there is an advantage that machining thereof is facilitated, and thus it is effective in reducing the time of manufacturing processes.

### Industrial Applicability

As described above, the present invention is useful as a permanent-magnet type rotating electrical machine that can reduce torque ripples while maintaining the diametral accuracy of a rotor core.

### Reference Signs List

- 1: permanent-magnet type electric motor
- 2: stator
- 3: stator core
- 3a: slot
- 3b: teeth
- 4: stator coil
- 5: rotor
- 6: rotor core
- 7 (7a to 7c), 15a: magnet insertion hole
- 8 (8a to 8c), 16 (16a to 16c): permanent magnet
- 9 (9a1, 9a2, 9b1, 9b2, 9c1, 9c2), 17a1: cavity
- 18: rotation gap
- 20a, 20b: flux control hole
- 22: magnetic pole gap
- 24a, 24c: broken line
- 30: center line

## Claims

1. A permanent-magnet type rotating electrical machine (1) comprising:
a stator (2) having a plurality of slots (3a) for accommodating a stator coil (4) inside the slots;
a rotor (5) having a rotor core (6) of laminated electric steel plates, wherein the rotor core (6) is arranged rotatably via a rotation gap (18) with respect to the stator, with a plurality of permanent magnets (8, 16) per pole embedded in the rotor core;
magnet insertion holes (7a-7c) formed in a protruding shape toward a center of the rotor for embedding the permanent magnets (8, 16) in the rotor core; and
a cavity (9) formed in the rotor core at least on both of outer end sides of each of the permanent magnets (8, 16) when the permanent magnets are embedded in each of the magnet insertion holes;
**characterized by** a pair of flux control holes (20a, 20b) provided between each two adjacent magnetic poles in a symmetrical shape with respect to a radial center line (30) between the each two adjacent magnetic poles, in a magnetic pole gap (22) between a first permanent magnet group (8) including the permanent magnets and another permanent magnet group (16) adjacent to the first permanent magnet group,
wherein the electromagnetic steel plates are integrated and bonded by caulking in that each of the flux control holes is a hole having a caulking structure.

2. The permanent-magnet type rotating electrical machine according to claim 1, wherein at least three magnet insertion holes per pole for embedding permanent magnets are formed in the rotor core, in a substantially U-shape so as to be open toward the outer circumference of the rotor core.

3. The permanent-magnet type rotating electrical machine according to claim 1, wherein the magnet insertion holes are formed in a V-shape so as to be open toward the outer circumference of the rotor core.

## Patentansprüche

1. Rotierende elektrische Maschine (1) vom Permanentmagnettyp, mit:
einem Stator (2), der eine Mehrzahl von Schlitzen (3a) zum Aufnehmen einer Statorspule (4) innerhalb der Schlitze aufweist;
einem Rotor (5), der einen Rotorkern (6) aus laminierten elektrischen Stahlplatten aufweist, wobei der Rotorkern (6) rotierbar mittels einer Rotationslücke (18) in Bezug auf den Stator ist, mit einer Mehrzahl von Permanentmagneten (8, 16) pro Pol, die in dem Rotorkern eingebettet sind;
Magneteinfügungslöcher (7a-7c), die in einer vorspringenden Form in Richtung einer Mitte des Rotors zum Einbetten der Permanentmagnete (8, 16) in dem Rotorkern ausgebildet sind;
einem Hohlraum (9), der in dem Rotorkern zumindest an beiden der Außenendseiten von jedem der Permanentmagnete (8, 16) ausgebildet ist, wenn die Permanentmagnete in jedem der Magneteinfügungslöcher eingebettet sind;
**gekennzeichnet durch** ein Paar von Flusssteuerungslöchern (20a, 20b), die zwischen jeden zwei benachbarten Magnetpolen in symmetrischer Form in Bezug auf eine radiale Mittellinie (30) zwischen den jeweiligen zwei benachbarten Magnetpolen bereitgestellt sind, in einer Magnetpollücke (22) zwischen einer ersten Permanentmagnetgruppe (8), die die Permanentmagnete aufweist, und einer anderen Permanentmagnetgruppe (16) benachbart zu der ersten Permanentmagnetgruppe, wobei die elektromagnetischen Stahlplatten durch Verstemmen integriert und verbunden sind indem jedes der Flusssteuerungslöcher ein Loch ist, das eine Stemmstruktur aufweist.

2. Rotierende elektrische Maschine vom Permanentmagnettyp nach Anspruch 1, wobei mindestens drei Magneteinfügungslöcher pro Pol zum Einbetten von Permanentmagneten in dem Rotorkern ausgebildet sind, in einer im Wesentlichen U-Form, um offen in Richtung des Außenumfangs des Rotorkerns zu sein.

3. Rotierende elektrische Maschine vom Permanentmagnettyp nach Anspruch 1, wobei die Magneteinfügungslöcher in einer V-Form ausgebildet sind, um offen in Richtung des Außenumfangs des Rotorkerns zu sein.

## Revendications

1. Machine électrique tournante du type à aimants permanents (1) comprenant :
un stator (2) ayant une pluralité de fentes (3a) pour recevoir une bobine de stator (4) à l'intérieur des fentes ;
un rotor (5) ayant un noyau de rotor (6) de plaques d'acier électriques laminées, le noyau de rotor (6) étant agencé de manière rotative par l'intermédiaire d'un intervalle de rotation (18) par rapport au stator, avec une pluralité d'aimants permanents (8, 16) par pôle intégrés dans le noyau de rotor ;
des trous d'insertion d'aimants (7a-7c) formés en forme de saillie vers le centre du rotor pour intégrer les aimants permanents (8, 16) dans le noyau de rotor ; et
une cavité (9) formée dans le noyau de rotor au moins sur les deux côtés d'extrémité extérieurs de chacun des aimants permanents (8, 16) lorsque les aimants permanents sont intégrés dans chacun des trous d'insertion des aimants ;
**caractérisée par** une paire de trous de contrôle de flux (20a, 20b) prévus entre chacun des deux pôles magnétiques adjacents dans une forme symétrique par rapport à une ligne centrale radiale (30) entre les deux pôles magnétiques adjacents, dans un espace polaire magnétique (22) entre un premier groupe d'aimants permanents (8) incluant les aimants permanents et un autre groupe d'aimants permanents (16) adjacent au premier groupe d'aimants permanents,
les plaques d'acier électromagnétiques étant intégrées et liées par calfeutrage, en ce que chacun des trous de contrôle de flux est un trou ayant une structure de calfeutrage.

2. Machine électrique tournante du type à aimants permanents selon la revendication 1, au moins trois trous d'insertion d'aimants par pôle pour intégrer des aimants permanents étant formés dans le noyau de rotor, dans une forme sensiblement en U, pour être ouverts vers la périphérie extérieure du noyau de rotor.

3. Machine électrique tournante du type à aimants permanents selon la revendication 1, les trous d'insertion d'aimants étant formés en forme de V de manière à être ouverts vers la circonférence extérieure du noyau de rotor.
